# EUROPÄISCHE PATENTSCHRIFT

(11) **EP 1 921 097 B1**
(45) Veröffentlichungstag und Bekanntmachung des Hinweises auf die Patenterteilung: **04.08.2010**
(21) Anmeldenummer: 07021183.4
(22) Anmeldetag: 30.10.2007
(51) Int. Cl.: C08G 18/10, C08G 18/50, C08G 18/76, B32B 27/08

(54) **Kunststoffverbundelemente und ein Verfahren zu ihrer Herstellung**
Plastic composite elements and method for their production
Eléments composites en matière plastique et leur procédé de fabrication

(30) Priorität: 10.11.2006 DE 102006052987
(43) Veröffentlichungstag der Anmeldung: 14.05.2008
(73) Patentinhaber: Bayer MaterialScience AG, 51368 Leverkusen (DE)
(72) Erfinder: Haas, Peter, Dr., 42781 Haan (DE); Lövenich, Catherine, Dr., 51469 Bergisch Gladbach (DE); Grammes, Hartwig, 51375 Leverkusen (DE)

(56) Entgegenhaltungen:
- EP-A- 1 531 173
- GB-A- 1 279 894

## Beschreibung

Die Erfindung betrifft Verbundelemente aus einer thermoplastischen Kunststoffschicht und einer Polyurethanschicht, ein Verfahren zu deren Herstellung sowie ihre Verwendung.

Polyisocyanat-Polyadditionsprodukte erhältlich durch Umsetzung von Isocyanaten mit gegenüber Isocyanaten reaktiven Verbindungen, beispielsweise Polyolen, d.h. Verbindungen, die mindestens zwei Hydroxylgruppen aufweisen, sowie Verbundelemente von diesen Produkten mit weiteren Kunststoffen sind allgemein bekannt. Eine Belastung dieser Verbundelemente durch hohe Temperaturen und Luftfeuchtigkeiten führt häufig zu einer unerwünschten Ablösung der Kunststoffe von den Polyisocyanat-Polyadditionsprodukten. Insbesondere beim Einsatz solcher Verbundelemente im Automobilbau, für die eine solche Belastung nicht ausgeschlossen werden kann, ist eine Ablösung der Polyisocyanat-Polyadditionsprodukte von den weiteren Kunststoffen und damit eine Zerstörung des Verbundelementes nicht akzeptabel.

Bei der Herstellung der Verbundelemente und insbesondere der Polyisocyanat-Polyadditionsprodukte kann sich das Problem ergeben, dass die Ausgangskomponenten, insbesondere die Polyolkomponente, die die gegenüber Isocyanaten reaktiven Ausgangsstoffe beinhaltet, keine stabile Mischungen ergeben. Gerade bei niedrigen Temperaturen, beispielsweise unterhalb von 20°C, können einzelne Polyole dazu neigen, in der Polyolkomponente auszuflocken oder sich in der Polyolkomponente abzusetzen. Gerade zur reproduzierbaren Herstellung qualitativ hochwertiger Produkte gilt es, dieses Problem zu vermeiden.

DE-A 10 022 280 beschreibt ein Verfahren zur Herstellung von Verbundelementen mit verbesserter Haftung sowie Feuchtalterungseigenschaften solcher Verbundwerkstoffe aus Thermoplasten und Polyurethanen. Der Verbund wird beispielsweise zur Herstellung von Armaturentafeln verwendet, wobei diese Tafeln üblicherweise aus beispielsweise einem Thermoplastträger, einem PUR-Schaum sowie einer weiteren Deckschicht aus beispielsweise PVC, TPO, ABS, thermoplastischen Polyurethanen, Polyurethansprühhäuten u.a. aufgebaut sind.

Durch die Verwendung von Estergruppen enthaltenden Isocyanat-Polyester-Prepolymeren zur Herstellung von Polyurethanschaumstoffen gemäß DE-A 10 022 280 werden verbesserte Eigenschaften, insbesondere eine gute Haftung zwischen dem Thermoplasten und derartigen Polyurethanschaumstoffen erhalten. Bei einer Feuchtlagerung eines solchen Verbundes bis 80 Stunden bei 80°C und 80 % relativer Luftfeuchte liegt ein intakter Verbund aus Thermoplast und Polyurethanschaum vor. Danach löst sich der Verbund allerdings.

Eine weitere Möglichkeit zur Herstellung von Verbunden ist in EP-A 1 531 173 aufgezeigt, in welcher Isocyanat-Polycarbonat-Prepolymere zur Herstellung von Polyurethanschaumstoffen mit verbesserter Haftung zu anderen Thermoplasten bei Feuchtalterung beschrieben werden. Diese, die Haftung von PUR-Schaumstoffen gegenüber Thermoplastträgern wesentlich verbessernden Polyester oder Polycarbonate müssen auf der Isocyanatseite eingesetzt werden, da die Löslichkeit von diesen Komponenten in den mit zu verwendenden Polyetherpolyolen sehr begrenzt ist.

Aufgabe der Erfindung war es somit, Verbundelemente zu entwickeln, die aufgrund ihrer hervorragenden mechanischen Eigenschaften beispielsweise im Automobilbau eingesetzt werden können und bei denen die Haftung zwischen dem Kunststoff und den daran haftenden Polyisocyanat-Polyadditionsprodukten auch bei einer Langzeitlagerung wie bei den Testmethoden "Klimawechseltest" oder "Blooming-Test" nicht verloren geht. Insbesondere sollten die Verbundelemente mit Ausgangskomponenten herstellbar sein, die stabile Mischungen ergeben und somit einfach und reproduzierbar eingesetzt werden können, ohne dass es beispielsweise zu Ausflockungen udgl. kommt.

Diese Aufgabe konnte durch die erfindungsgemäße Verwendung von Phosphorsäureestergruppen enthaltenden Isocyanatprepolymeren zur Herstellung von Polyurethanschaumstoffen gelöst werden. Die Haftung zwischen PUR-Schaum und Thermoplast konnte dadurch überraschenderweise verbessert werden, und zwar auch unter den drastischen Bedingungen einer Feuchtlagerung bei langer Belastungsdauer und längeren Belastungszyklen bei wechselnden Temperaturen. Dies ist umso überraschender, als Phosphorsäureestergruppen als hydrolyseempfindlich gelten. Diese Phosphorsäureester können außerdem wegen ihrer guten Löslichkeit in Polyetherpolyolen überraschenderweise auch auf der Seite der Polyolformulierung eingesetzt werden, wobei ebenfalls eine gute Haftungswirkung am Thermoplast resultiert.

Gegenstand der Erfindung sind daher Verbundelemente enthaltend als Schicht
i) einen thermoplastischen Kunststoff, an den sich haftend als Schicht
ii) das Produkt der Umsetzung einer Reaktionsmischung enthaltend
   a) ein Isocyanat aus der Gruppe bestehend aus (i) Isocyanatgruppen-aufweisenden Prepolymeren erhältlich aus der Umsetzung mindestens eines Isocyanats und mindestens eines Phosphorsäuretriesters, in dem mindestens eine der drei Estergruppen ein hydroxyfunktionelles Alkoxylat ist, wobei das Prepolymer einen Isocyanatgruppengehalt von 5 bis 45 % aufweist, und (ii) organischen Diisocyanaten,
   b) im Fall des Einsatzes von a) (i) gegenüber Isocyanaten reaktive Verbindungen oder im Fall des Einsatzes von a) (ii) ein Gemisch aus gegenüber Isocyanaten reaktiven Verbindungen und mindestens einem Phosphorsäuretriester, in dem mindestens eine der drei Estergruppen ein hydroxyfunktionelles Alkoxylat ist, und gegebenenfalls
   c) Katalysatoren
   d) Treibmittel
   e) Hilfs- und/oder Zusatzstoffe
   anschließt.

Das erfindungsgemäße Verbundelement kann eine weitere Schicht iii) aus einem thermoplastischen Kunststoff aufweisen, die sich an die Schicht ii) anschließt. Diese Schicht iii) fungiert bevorzugt als Dekorschicht.

Die erfindungsgemäßen Verbundelemente können als thermoplastische Kunststoffschicht (i) übliche thermoplastische Kunststoffe enthalten, wie beispielsweise Polyphenylenoxid (PPO), Polyvinylchlorid (PVC), Styrolmaleinsäureanhydrid (SMA), Acrylnitril-Butadien-Styrol-Acrylester (ASA), Polycarbonat (PC), thermoplastisches Polyurethan (TPU), Polyethylen, Polypropylen, thermoplastisches Polyolefin (TPO) und Polycarbonat/Styrol-Acrylnitril-Butadien (PC/ABS-Blend). Bevorzugt weist diese Schicht (i) eine Dicke von 0,2 bis 5 mm, besonders bevorzugt von 0,2 bis 3 mm auf.

Die zusätzliche optionale thermoplastische Kunststoffschicht (iii) enthält als Kunststoff beispielsweise PVC, ASA, SMA, TPU, Polyethylen, Polypropylen, PC/ABS oder TPO. Bevorzugt weist diese Schicht eine Dicke von 0,1 bis 1,5 mm auf. Sie kann vorzugsweise in Form einer Kunststofffolie eingesetzt werden. Derartige Folien sind kommerziell erhältlich, und ihre Herstellung ist allgemein bekannt. Die Folien können auch aus mehreren Kunststoffschichten bestehen (Mehrschichtfolien), wobei beispielsweise eine Schicht einen ASA- und eine Schicht einen Polycarbonat-Kunststoff enthält.

Erfindungsgemäß schließen sich an die Kunststoffschicht (i) haftend die Schicht aus Polyisocyanat-Polyadditionsprodukten (ii) an, beispielsweise Polyurethane, die gegebenenfalls Isocyanurat- und/oder Harnstoffstrukturen aufweisen können. Die Herstellung dieser Polyisocyanat-Polyadditionsprodukte, bevorzugt Polyurethane, die in kompakter oder bevorzugt zelliger Form, beispielsweise als Weichschaumstoff, Halbhartschaumstoff oder Hartschaumstoff, besonders bevorzugt als Halbhartschaumstoff vorliegen können, erfolgt in üblicher, allgemein bekannter Weise.

Als Ausgangsverbindungen für die unter ii) a) bzw. b) eingesetzten Phosphorsäuretriester seien beispielsweise folgende Verbindungen zu nennen:

Dibutylphosphat, Bis(2-ethylhexyl) phosphat, Dioctylphosphat, Biscyclohexylphosphat.

Diese werden durch Alkoxylierung mit Oxiranen, wie beispielsweise Propylenoxid und Ethylenoxid zu den Phosphorsäuretriestern umgesetzt. Bevorzugte Alkoxylierungsmittel sind Methyloxiran, Ethylenoxid und Ethyloxiran.

Als beispielhafte Reaktionsgleichung sei genannt:

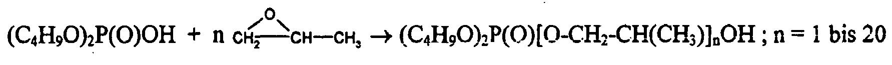

Bevorzugt sind solche Phosphorsäuretriester, die eine bis zehn Alkoxylatwiederholungseinheiten aufweisen.

Die Herstellung der erfindungsgemäßen Verbundelemente kann derart erfolgen, dass man die Komponenten a), b) und gegebenenfalls c), d), e) in Gegenwart einer thermoplastischen Kunststoffschicht (i) umsetzt.

Zur Herstellung der PU-Produkte können die Verbindung (a) und die gegenüber Isocyanaten reaktiven Verbindungen (b) und gegebenenfalls (d) in solchen Mengen zur Umsetzung gebracht werden, dass das Äquivalenzverhältnis von NCO-Gruppen von (a) zur Summe der reaktiven Wasserstoffatome von (b) und gegebenenfalls (d) bevorzugt 0,3 bis 1,8:1, besonders bevorzugt 0,4 bis 1,0:1 und insbesondere 0,4 bis 0,6:1, beträgt. Falls das Produkt (ii) zumindest teilweise Isocyanuratgruppen gebunden enthält, wird üblicherweise ein Verhältnis von NCO-Gruppen zur Summe der reaktiven Wasserstoffatome von 1,5 bis 60:1, vorzugsweise 1,5 bis 8:1, angewandt.

Die Umsetzung zum Produkt kann beispielsweise durch Handvermischung, mittels Hochdruck-oder Niederdruckmaschinen oder durch RIM-Verfahren (reaction-injection-molding) üblicherweise in offenen oder bevorzugt geschlossenen Formwerkzeugen durchgeführt werden. Geeignete Verarbeitungsmaschinen sind handelsüblich erhältlich (z.B. von Fa. Elastogran, Hennecke, Krauss Maffei u.a.).

Zur Herstellung von kompakten Produkten als (ii) hat es sich als vorteilhaft erwiesen, wenn die Komponenten zur Herstellung von kompakten Polyisocyanat-Polyadditionsprodukten vor der Verarbeitung durch Anlegen von Vakuum entgast werden, um blasenfreie Formteile zu erhalten. Bei der Verarbeitung mit Polyurethan(PU)-Maschinen ist es auch vorteilhaft, wenn während der Verarbeitung die Vorlagebehälter unter vermindertem Druck stehen.

Die Ausgangskomponenten werden üblicherweise in Abhängigkeit vom Anwendungsfall bei einer Temperatur von 0 bis 100°C, vorzugsweise von 20 bis 80°C, gemischt und beispielsweise in das Formwerkzeug eingebracht. Die Vermischung kann, wie bereits dargelegt wurde, mechanisch mittels eines Rührers oder einer Rührschnecke durchgeführt werden, oder kann in einem üblichen Hochdruckmischkopf erfolgen.

Die Umsetzung des Reaktionsgemisches kann beispielsweise in üblichen, bevorzugt temperierbaren und verschließbaren Formen durchgeführt werden. Insbesondere bei der Herstellung von möglichst glatten Produkten werden als Formwerkzeuge bevorzugt solche verwendet, deren Oberfläche möglichst glatt oder definiert ornamentiert ist und bevorzugt keine Unebenheiten, Risse, Kratzer oder Verunreinigungen aufweist. Die Oberfläche der Form kann beispielsweise durch Polieren behandelt werden.

Als Formwerkzeuge zur Herstellung der Verbundelemente können übliche und kommerziell erhältliche Werkzeuge eingesetzt werden, deren Oberfläche beispielsweise aus Stahl, Aluminium, Email, Teflon, Epoxyharz oder einem anderen polymeren Werkstoff besteht, wobei die Oberfläche gegebenenfalls verchromt, beispielsweise hartverchromt sein kann. Bevorzugt sollten die Formwerkzeuge temperierbar sein, um die bevorzugten Temperaturen einstellen zu können, verschließbar und bevorzugt zur Ausübung eines Druckes auf das Produkt entsprechend ausgerüstet sein.

Die Umsetzung zu den Polyisocyanat-Polyadditionsprodukten erfolgt üblicherweise bei einer Formtemperatur (dies kann vorzugsweise auch die Temperatur der Ausgangskomponenten sein) von 20 bis 120°C, bevorzugt 25 bis 100°C, besonders bevorzugt 25 bis 40°C, für eine Dauer von üblicherweise 0,5 bis 30 min, bevorzugt 1 bis 5 min. Die Umsetzung im Formwerkzeug erfolgt erfindungsgemäß in direktem Kontakt mit (i). Dies kann beispielsweise dadurch erreicht werden, dass man (i) vor der Umsetzung, wenn es sich bei (i) um eine Folie handelt, bevorzugt frei von Falten, in der Form plaziert und anschließend wie bereits beschrieben die Reaktionsmischung in die Form auf (i) füllt und anschließend bevorzugt die Form verschließt. Fasern als Komponente (e) der Reaktionsmischung können sowohl in dem Reaktionsgemisch eingesetzt werden, als auch in Form von Matten oder Geweben. Werden Matten oder Gewebe als Komponente (e) eingesetzt, so können diese beispielsweise vor dem Einfüllen der Reaktionsmischung in die Form auf (i) plaziert werden und anschließend das Reaktionsgemisch, das in diesem Fall keine Fasern (e) zusätzlich zu den Matten oder Geweben enthaltend muss, in die Form eingefüllt wird.

Als Isocyanate können allgemein bekannte (cyclo)aliphatische und/oder insbesondere aromatische Polyisocyanate, bevorzugt Diisocyanate eingesetzt werden. Zur Herstellung der erfindungsgemäßen Verbundelemente eignen sich besonders aromatische Diisocyanate, vorzugsweise Diphenylmethandiisocyanat (MDI) und Toluylendiisocyanat (TDI).

Als gegenüber Isocyanaten reaktive Verbindungen können die allgemein bekannten Verbindungen eingesetzt werden, beispielsweise Polyetherpolyalkohole, Polyesterpolyalkohole und/oder Polycarbonatdiole, bevorzugt Polyetherpolyole und/oder Polyesterpolyalkohole, die üblicherweise ein Molekulargewicht von 500 bis 10000, insbesondere 1000 bis 6000 und bevorzugt eine Funktionalität gegenüber Isocyanatgruppen von 2 bis 6 aufweisen. Des Weiteren können die Verbindungen in Mischung mit Kettenverlängerungs- und/oder Vernetzungsmitteln verwendet werden. Bei den Kettenverlängerungsmitteln handelt es sich überwiegend um 2-funktionelle Alkohole mit Moleklargewichten von 60 bis 499, beispielsweise Ethylenglykol, Propylenglykol, Butandiol-1,4, Pentandiol-1,5. Bei den Vernetzungsmitteln handelt es sich um Verbindungen mit Molekulargewichten von 60 bis 499 und 3 oder mehr aktiven H-Atomen, vorzugsweise Aminen und besonders bevorzugt Alkoholen, beispielsweise Glyzerin, Trimethyolpropan und/oder Pentaerythrit.

Als Katalysatoren (c) können übliche Verbindungen eingesetzt werden, die beispielsweise die Reaktion der Komponente (a) mit der Komponente (b) stark beschleunigen. In Frage kommen beispielsweise allgemein für diesen Zweck bekannte tertiäre Amine und/oder organische Metallverbindungen, insbesondere Zinnverbindungen. Bevorzugt werden als Katalysatoren solche eingesetzt, die zu einem möglichst geringen Fogging, d.h. zu einer möglichst geringen Abgabe von flüchtigen Verbindungen aus dem Umsetzungsprodukt (ii) führen, beispielsweise Kaliumacetat und/oder Li-Salze und/oder tertiäre Amine mit mindestens einer funktionellen Hydroxyl-Gruppe.

Als Treibmittel (d) können zur Herstellung von geschäumten Schichten (ii), wie beispielsweise Polyurethan-Weich-, -Halbhart- oder -Hartschaumstoffen, die gegebenenfalls Harnstoff und/oder Isocyanuratstrukturen aufweisen können, allgemein bekannte chemisch oder physikalisch wirkende Verbindungen eingesetzt werden. Als chemisch wirkendes Treibmittel kann bevorzugt Wasser eingesetzt werden, welches durch Reaktion mit den Isocyanatgruppen Kohlendioxid bildet. Beispiele für physikalische Treibmittel, d.h. solche inerte Verbindungen, die unter den Bedingungen der Polyurethanbildung verdampfen, sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Die Menge der eingesetzten Treibmittel richtet sich nach der angestrebten Dichte der Schaumstoffe.

Die unterschiedlichen Treibmittel können einzeln oder in beliebigen Mischungen untereinander zum Einsatz kommen.

Die Umsetzung erfolgt gegebenenfalls in Anwesenheit von (e) Hilfs- und/oder Zusatzstoffen, wie z.B. Füllstoffen, Fasern, z.B. in Form von Geweben und/oder Matten, Zellreglern, oberflächenaktiven Verbindungen und/oder Stabilisatoren gegen Oxidation, thermischen oder mikrobiellen Abbau oder Alterung.

Bevorzugt ist der Einsatz von Prepolymeren, die aus der Umsetzung mindestens eines Isocyanats und eines Phosphorsäuretriester mit einer Hydroxylzahl von 40 bis 700 mg KOH/g erhältlich sind, wobei das Prepolymer einen Isocyanatgruppengehalt von 5 bis 45 % aufweist. Durch den Einsatz der Phosphorsäuretriester im Prepolymer sind diese in der Isocyanatkomponente stabil integriert. Ein Ausflocken oder Absetzen der Phosphorsäuretriester beispielsweise in der Polyolkomponente kann somit erst gar nicht auftreten.

Die Phosphorsäuretriester können allerdings auch in der "Polyolkomponente" eingesetzt werden. Diese Variante liefert ebenfalls stabile Polyurethansysteme. Ein Ausflocken oder Absetzen der Phosphorsäuretriester tritt nicht auf.

Die erfindungsgemäßen Verbundelemente weisen durch die Verwendung der eingangs beschriebenen Phosphorsäuretriester eine deutlich verbesserte Haftung zwischen (i) und (ii) auf, d.h. eine Haftung zum thermoplastischen Trägermaterial, insbesondere zu Trägermaterial aus PC/ABS und SMA auf. Diese verbesserte Haftung gewährleistet, dass beim Versuch des Abreißens des Schaums von dem Träger der Schaum ganzflächig auf dem Träger verbleibt. Durch die Verwendung der Phosphorsäuretriester konnte erreicht werden, dass die Haftung zwischen (i) und (ii) bei Messungen gemäß DIN 53 357 A im Anfangszustand sowie nach Wärme- und Feuchtwärmelagerung eine Abschälkraft von ≥ 2,5 N/cm erreicht. Dies gilt insbesondere auch nach längerer Feuchtalterung und Belastung durch den doppelten Klimawechseltest und den Blooming-Test.

Die erfindungsgemäßen Verbundelemente werden bevorzugt als Bauteile im Fahrzeug-, Flugzeug-oder Immobilienbau eingesetzt, beispielsweise als Armaturenbretter, Türverkleidungen, Hutablagen, Konsolen, Armauflagen oder Türspiegel.

Die Erfindung soll anhand der nachfolgenden Beispiele näher erläutert werden.

### Beispiele

### Beschreibung der Ausgangsstoffe

- **Polyol 1:**: Polyetherpolyol mit einer OH-Zahl von 35 und mindestens 80 % primären OH-Gruppen, hergestellt durch Addition von Propylenoxid/Ethylenoxid (82/18) an Glycerin als Starter.
- **Polyol 2:**: Polyetherpolyol mit einer OH-Zahl von 28 und mindestens 80 % primären OH-Gruppen, hergestellt durch Addition von Propylen/Ethylenoxid (82/18) an Glycerin als Starter und mit einem gepfropften Füllstoffgehalt von 20 Gew.-% aus Styrol/Acrylnitril (40 %/60 %).

### Phosphorsäureester 1:

3,36 mol Propylenoxid werden an 1 mol Dibutylphosphat addiert; OH-Zahl: 138,4 mgKOH/g

### Phosphorsäureester 2:

1,80 mol Propylenoxid werden an 1 mol Bis(2-ethylhexyl)phosphat addiert; OH-Zahl: 131,0 mgKOH/g

### Polyisocyanat 1:

Polyisocyanat der Diphenylmethanreihe, das durch Phosgenierung eines Anilin/Formaldehydkondensats erhalten wurde, mit einem Isocyanatgehalt von 31,5 Gew.% und einer Viskosität von 200 mPa.s bei 25°C.

### Polyisocyanat 2:

640 g 4,4'-Diisocyanatodiphenylmethan
80 g 2,4'-Diisocyanatodiphenylmethan
112 g Polyisocyanat 1
NCO-Gehalt: 32,4 %

### Polyisocyanatprepolymer 1:

576 g 4,4'-Diisocyanatodiphenylmethan
72 g 2,4'-Diisocyanatodiphenylmethan
72 g Polyisocyanat 1
100 g Phosphorsäureester 1
werden für 2 Stunden auf 95°C erhitzt.
NCO-Gehalt: 27,5 %
Viskosität: 75 mPa.s bei 25°C.

### Polyisocyanatprepolymer 2:

256 g 4,4'-Diisocyanatodiphenylmethan
32 g 2,4'-Diisocyanatodiphenylmethan
112g Polyisocyanat 1
100 g Phosphorsäureester 1
werden für 2 Stunden auf 95°C erhitzt.
NCO-Gehalt: 22,8 %
Viskosität: 165 mPa.s bei 25°C.

### Polyisocyanatprepolymer 3:

256 g 4,4'-Diisocyanatodiphenylmethan
32 g 2,4'-Diisocyanatodiphenylmethan
112 g Polyisocyanat 1
100 g Phosphorsäureester 2
werden für 2 Stunden auf 95°C erhitzt.
NCO-Gehalt: 23,2 %
Viskosität: 134 mPa.s bei 25°C.

### Verschäumungsbeispiele

Mit den in der Tabelle 1 angegebenen Formulierungen wurden Polyurethan-Formschäume hergestellt. Dazu wurden Polyol, Wasser und Aktivator vorgemischt. Dann wurde das Isocyanat zugesetzt, die Reaktionsmischung 10 Sekunden bei 1200 Upm homogenisiert und dann in eine Plattenform mit einer Temperatur von 40°C (Größe 200*200*20 mm) gegossen, auf deren Boden zuvor eine 100 x 150 mm große Thermospritzgussplatte vom Typ Pulse^{®} 630 GF auf Polycarbonat / ABS-Basis der DOW, Schwalbach mit einer Dicke von 3 mm mittig fixiert worden war.

| **Beispiel** | **1** | **2** | **3** | **4*** |
|---|---|---|---|---|
| Polyol 1 | 67,96 | 67,46 | 57,95 | 67,96 |
| Polyol 2 | 27,79 | 27,79 | 27,8 | 27,74 |
| Phosphorsäureester 2 | - | - | 10,0 | - |
| Diethanolamin | 1,11 | 1,11 | 1,11 | 1,11 |
| Schwarzpaste N der ISL-Chemie | 0,51 | 0,51 | 0,51 | 0,51 |
| Wasser | 1,8 | 1,8 | 1,8 | 1,8 |
| Jeffcat ZF 10 von Huntsman ICI | 0,33 | 0,33 | 0,33 | 0,33 |
| Dimethylaminopropylharnstoff 70%ig in Dipropylenglycol | 0,5 | 0,5 | 0,5 | 0,5 |
| Stabilisator B 8715 von Goldschmidt | - | - | 0,5 | |
| Polyisocyanat 2 | - | - | 40,0 | 36,0 |
| Polyisocyanatprepolymer 2 | 51,1 | - | - | - |
| Polyisocyanatprepolymer 3 | - | 50,2 | - | - |
| Startzeit [s] | 14 | 14 | 12 | 11 |
| Steigzeit [s] | 92 | 92 | 75 | 81 |
| Rohdichte [kg/m³], frei geschäumt | 82 | 82 | 68 | 68 |
| Rohdichte [kg/m³] Form | 150 | 150 | 150 | 150 |

| | | | | |
|---|---|---|---|---|
| *Vergleich | | | | |

Mischungsverhältnis: 100 Gew.-Teile Polyolformulierung (Polyole, Wasser, Additive) auf die in der Tabelle angegebene Isocyanatmenge.

Die Mengenangaben in der Tabelle sind Gew.-Teile.

### Untersuchung der Haftung zwischen Schaumstoff und Thermoplast

Die Prüfkörper wurden nach Lagerung von 24 h bei RT den Feuchtalterungstests unterzogen.

### A) Klimawechseltest (KWT)

### Prüfbedingungen

| | | |
|---|---|---|
| 1. | Temperaturänderungsgeschwindigkeit | min. 1 K/min |
| 2. | Beharrungsdauer bei Grenztemperatur | 4 h |
| 3. | Grenztemperaturen | +80°C und -40°C |
| 4. | relative Luftfeuchtigkeit bei +80°C | 80 % |
| 5. | Versuchsablauf: | |

Während eines Zyklus wird der Prüfkörper von RT auf 80°C aufgeheizt, 4 Stunden bei 80°C gehalten, auf -40°C abgekühlt, 4 Stunden bei -40°C gehalten und auf RT erwärmt (Zyklenzeit: 12 Stunden).

In der Testreihe wurden die Prüfkörper insgesamt 288 h belastet, und zwar in Form von 24 Zyklen zu 12 h Testdauer (doppelter KWT).

### B) Blooming Test

Lagerung der Prüfkörper unter den Bedingungen:

| | |
|---|---|
| Dauer: | 500 h |
| Temperatur: | 70°C |
| Luftfeuchte: | 85 % |

### Ergebnisse des doppelten Klimawechseltests (KWT) und des Blooming-Tests:

| Test/Haftung | Doppelter KWT | Blooming Test |
|---|---|---|
| Verbund 1 | 2 - 3 | 3 |
| Verbund 2 | 2 - 3 | 3 |
| Verbund 3 | 2 - 3 | 3 |
| Verbund 4* | 5 | 5 |

| | | |
|---|---|---|
| *nicht erfindungsgemäßer Versuch | | |

### Haftungskriterien

- Bewertung:: 1 = sehr gut
2 = gut (schwer abkratzbar / partiell abkratzbar)
3 = in Ordnung (mit Fingernagel abkratzbar)
4 = schlecht (partiell blank)
5 = keine Haftung (total blank)

Die erfindungsgemäßen Verbundelemente zeigen nach doppeltem KWT (288 h Gesamtdauer) eine gute bis akzeptable Haftung zwischen Polyurethan und dem Thermoplastträger und erfüllen daher die Erfordernisse einer Langzeitprüfung.

Ähnliche Befunde wurden im Blooming-Test mit einer Gesamtdauer von 500 h gefunden.

## Patentansprüche

1. Verbundelemente enthaltend als Schicht
i) mindestens einen thermoplastischen Kunststoff, an den sich haftend als Schicht
ii) das Produkt der Umsetzung einer Reaktionsmischung enthaltend
a) ein Isocyanat aus der Gruppe bestehend aus (i) Isocyanatgruppen-aufweisenden Prepolymeren erhältlich aus der Umsetzung mindestens eines Isocyanats und mindestens eines Phosphorsäuretriesters, in dem mindestens eine der drei Estergruppen ein hydroxyfunktionelles Alkoxylat ist, wobei das Prepolymer einen Isocyanatgruppengehalt von 5 bis 45 % aufweist, und (ii) organischen Diisocyanaten,
b) im Fall des Einsatzes von a) (i) gegenüber Isocyanaten reaktive Verbindungen oder im Fall des Einsatzes von a) (ii) ein Gemisch aus gegenüber Isocyanaten reaktiven Verbindungen und mindestens einem Phosphorsäuretriester, in dem mindestens eine der drei Estergruppen ein hydroxyfunktionelles Alkoxylat ist, und gegebenenfalls
c) Katalysatoren
d) Treibmittel
e) Hilfs- und/oder Zusatzstoffe
anschließt.

2. Verfahren zur Herstellung von Verbundelementen gemäß Anspruch 1 enthaltend eine thermoplastische Kunststoffschicht (i) und daran haftend eine Schicht (ii) aus Polyisocyanat-Polyadditionsprodukten, **dadurch gekennzeichnet, dass** man
a) ein Isocyanat aus der Gruppe bestehend aus (i) Isocyanatgruppen-aufweisenden Prepolymeren erhältlich aus der Umsetzung mindestens eines Isocyanats und mindestens eines Phosphorsäuretriesters, in dem mindestens eine der drei Estergruppen ein hydroxyfunktionelles Alkoxylat ist, wobei das Prepolymer einen Isocyanatgruppengehalt von 5 bis 45 % aufweist, und (ii) organischen Diisocyanaten,
b) im Fall des Einsatzes von a) (i) gegenüber Isocyanaten reaktive Verbindungen oder im Fall des Einsatzes von a) (ii) ein Gemisch aus gegenüber Isocyanaten reaktiven Verbindungen und mindestens einem Phosphorsäuretriester, in dem mindestens eine der drei Estergruppen ein hydroxyfunktionelles Alkoxylat ist, und gegebenenfalls
c) Katalysatoren,
d) Treibmittel
e) Hilfs- und/oder Zusatzstoffe
in Gegenwart der Schicht (i) umsetzt.

3. Verwendung der Verbundelemente gemäß Anspruch 1 zur Herstellung von Bauteilen im Fahrzeug-, Flugzeug- und Immobilienbau.

## Claims

1. Composite elements containing, as a layer,
i) at least one thermoplastic polymer, adhering to which, as a layer,
ii) the product of the reaction of a reaction mixture containing
a) an isocyanate from the group consisting of (i) prepolymers containing isocyanate groups obtainable from the reaction of at least one isocyanate and at least one phosphoric acid triester, in which at least one of the three ester groups is a hydroxyfunctional alkoxylate, the prepolymer having an isocyanate group content of 5 to 45%, and (ii) organic diisocyanates,
b) in the case of the use of a) (i) compounds reactive towards isocyanates or in the case of the use of a) (ii) a mixture of compounds reactive towards isocyanates and at least one phosphoric acid triester in which at least one of the three ester groups is a hydroxyfunctional alkoxylate, and optionally
c) catalysts
d) blowing agents
e) auxiliary substances and/or additives
is attached.

2. A process for the production of composite elements according to claim 1, containing a thermoplastic polymer layer (i) and, adhering thereto, a layer (ii) of polyisocyanate polyaddition products, **characterised in that**
a) an isocyanate from the group consisting of (i) prepolymers containing isocyanate groups obtainable from the reaction of at least one isocyanate and at least one phosphoric acid triester, in which at least one of the three ester groups is a hydroxyfunctional alkoxylate, the prepolymer having an isocyanate group content of 5 to 45%, and (ii) organic diisocyanates,
b) in the case of the use of a) (i) compounds reactive towards isocyanates or in the case of the use of a) (ii) a mixture of compounds reactive towards isocyanates and at least one phosphoric acid triester in which at least one of the three ester groups is a hydroxyfunctional alkoxylate, and optionally
c) catalysts,
d) blowing agents
e) auxiliary substances and/or additives
are reacted in the presence of the layer (i).

3. Use of the composite elements according to claim 1 for the production of components in vehicle, aircraft and property construction.

## Revendications

1. Eléments composites contenant sous forme de couche
i) au moins une matière synthétique thermoplastique à laquelle se joint de manière adhésive sous forme de couche
ii) le produit de la réaction d'un mélange réactionnel contenant
a) un isocyanate du groupe consistant en (i) les prépolymères comportant des groupes isocyanates pouvant être obtenus par la réaction d'au moins un isocyanate et d'au moins un triester de l'acide phosphorique où au moins l'un des trois groupes esters est un alcoxylat hydroxyfonctionnel, où le prépolymère présente une teneur en groupes isocyanates de 5 à 45 %, et (ii) les diisocyanates organiques,
b) dans le cas de l'utilisation de a) (i) des composés réactifs à l'égard des isocyanates ou dans le cas de l'utilisation de a) (ii) un mélange de composés réactifs à l'égard des isocyanates et d'au moins un triester de l'acide phosphorique où au moins l'un des trois groupes esters est un alcoxylat hydroxyfonctionnel, et éventuellement
c) des catalyseurs
d) des porogènes
e) des auxiliaires et/ou additifs.

2. Procédé de production d'éléments composites selon la revendication 1 contenant une couche de matière synthétique thermoplastique (i) et adhérant à celle-ci une couche (ii) de produits de polyaddition de polyisocyanate, **caractérisé en ce que** l'on fait réagir en présence de la couche (i)
a) un isocyanate du groupe consistant en (i) les prépolymères comportant des groupes isocyanates pouvant être obtenus par la réaction d'au moins un isocyanate et d'au moins un triester de l'acide phosphorique où au moins l'un des trois groupes esters est un alcoxyla hydroxyfonctionnel, où le prépolymère présente une teneur en groupes isocyanates de 5 à 45 %, et (ii) les diisocyanates organiques,
b) dans le cas de l'utilisation de a) (i) des composés réactifs à l'égard des isocyanates ou dans le cas de l'utilisation de a) (ii) un mélange de composés réactifs à l'égard des isocyanates et d'au moins un triester de l'acide phosphorique où au moins l'un des trois groupes esters est un alcoxylat hydroxyfonctionnel, et éventuellement
c) des catalyseurs,
d) des porogènes
e) des auxiliaires et/ou additifs.

3. Utilisation des éléments composites selon la revendication 1 pour la production d'éléments de construction dans la construction automobile, aéronautique et immobilière.
